# EUROPEAN PATENT SPECIFICATION

(11) **EP 2 998 160 B1**
(45) Date of publication and mention of the grant of the patent: **16.01.2019**
(21) Application number: 15190842.3
(22) Date of filing: 17.12.2007
(51) Int. Cl.: B60R 1/00

(54) **METHOD OF FIXING AN APPARATUS COMPRISING A TOWING MIRROR**
VERFAHREN ZUR BEFESTIGUNG EINER VORRICHTUNG MIT EINEM ANHÄNGERSPIEGEL
PROCEDE DE FIXATION D'UN DISPOSITF AVEC UN MIRROIR DE REMORQUE

(30) Priority: 20.12.2006 GB 0625340
(43) Date of publication of application: 23.03.2016
(62) Divisional of application: 07024372.0
(73) Proprietor: Milenco Limited, Wolverton Mill Milton Keynes MK12 5TS (GB)
(72) Inventor: Milbank, Frederick Nigel, Milton Keynes, Buckinghamshire MK13 0RA (GB)
(74) Representative: Turner, Richard Charles

(56) References cited:
- EP-A1- 0 437 695
- EP-A1- 1 334 873
- NL-A- 9 002 818
- US-A- 5 870 236

## Description

This invention relates to a method of fixing an apparatus comprising a towing mirror. Such apparatus can be used by vehicle drivers, for example when the driver is towing a wide load and needs an extension to their conventional wing mirror.

If a vehicle driver is towing a wide load, such as a car with a caravan, then it is advantageous, and in some jurisdictions a legal requirement, that the conventional vehicle wing mirror be extended, in order for the vehicle driver to be able to see behind and along the side of the wide load. To achieve this, it is known to provide apparatus, sometimes referred to as a towing mirror, which includes a mirror and a device for fixing that mirror to the conventional wing mirror. US patent 5,870,236 discloses a towing mirror. However, as vehicle design becomes more complicated and elaborate, there is a difficulty providing a towing mirror that will fit all, or at least the vast majority, of wing mirror designs.

It is therefore an object of the invention to improve upon the known art.

According to the present invention, there is provided a method of fixing an apparatus comprising a towing mirror to a vehicle wing mirror, the apparatus comprising a mirror assembly, an arm connected to the mirror assembly, and two clamps connected to the arm and for connecting to a vehicle wing mirror, each clamp comprising a frame and a movable clamping member, the method comprising the steps of rotating the clamps in opposite directions about respective axis's substantially perpendicular to the arm, and tightening the clamping members to fasten the towing mirror in place on the wing mirror.

Owing the invention, it is possible to provide apparatus (a towing mirror) which mounts on virtually all current designs of wing mirror. By being rotatable relative to the arm of the apparatus, the clamps can be adjusted to the local shape of the vehicle wing mirror to which it is being fixed. The provision of two clamps on the arm provides a towing mirror that can be very securely fastened to a vehicle wing mirror.

Advantageously, the clamp comprises a frame and a movable clamping member, the clamping member including an engaging portion, the engaging portion is connected to a shaft and is turnably mounted on the shaft, and one of the frame and the engaging portion includes a guiding slot, and the other of the frame and the engaging portion includes a guiding element engaging in the guiding slot.

Preferably the apparatus comprises a clamp, the clamp comprising a frame and a movable clamping member, the clamping member including an engaging portion, characterised in that one of the frame and the engaging portion includes a guiding slot, and the other of the frame and the engaging portion includes a guiding element engaging in the guiding slot. Owing to this aspect, it is possible to provide a clamp with a guiding arrangement so that the engaging portion of the clamping member is relatively easy to keep in position when the clamp is being opened and closed.

Embodiments of the present invention will now be described, by way of example only, with reference to the accompanying drawings, in which:-
Figure 1 is a front view of apparatus including a mirror assembly,
Figure 2 is a side view of the apparatus of Figure 1,
Figures 3 to 5 show alternative arrangements of the apparatus of Figure 2, and
Figure 6 is a front view of apparatus of Figure 1, in use.

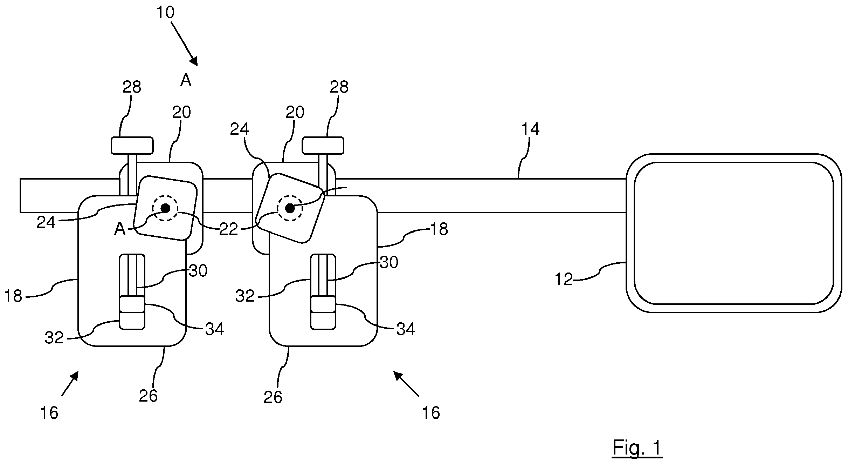

Figure 1 shows the apparatus 10, which comprising a mirror assembly 12, an arm 14 connected to the mirror assembly 12, and two brackets 16 mounted on the arm 14. Each bracket 16 comprises a clamp 18 for connecting to a vehicle wing mirror (not shown), and each clamp 18 is rotatable about an axis A, the axis A being substantially perpendicular to the arm 14. The apparatus 10 is shown with two brackets 16, as a preferred embodiment, but the apparatus 10 could equally well be provided with only a single bracket 16.

Each bracket 16 also includes a fixing portion 20 for connecting the respective bracket 16 directly to the arm 14 of the apparatus 10, and a shaft 22 for connecting the clamp 18 to the fixing portion 20. The clamp 18 is rotatable about the shaft 22. Each bracket 16 also includes a locking element 24 for preventing rotation of the clamp 20.

The shaft 22, with the locking element 24 fixably mounted thereto can be a screw-thread that the clamp 18 will rotate about. The locking element 24 can be unscrewed to allow the clamp 18 to be rotated into position, and then the locking element 24 can be retightened to fix the clamp 18 in position, so that the clamp 18 can no longer move relative to the arm 14.

Since the apparatus 10 is designed as a towing mirror, a wide variety of different shapes of vehicle wing mirror can have the apparatus 10 fixed thereto. The provision of the rotation of the clamp 18 on each bracket 16 allows each clamp 18 to be positioned to best suit the local shape of the vehicle wing mirror to which the bracket 16 is being fixed. In particular, since there are provided two brackets 16 in the embodiment of Figure 1, and both have clamps 18 that are rotatable independently of each other, a vehicle wing mirror with a varying shape can be connected to, without any impact on the performance of the towing mirror. Such a connection is relatively easy for a user to make themselves without any specialist assistance.

The apparatus 10 is designed to fit to a wing mirror of a vehicle such as a car. The apparatus 10 allows the driver of the car to be able to see behind them, by extending the mirror assembly 12 out and beyond a wide load that the car may be towing. The arm 14 of the apparatus 10 extends in the same plane as the mirror assembly 12, out to the side of the mirror assembly 12, and is at least twice the length of the mirror assembly 12. The arm 14 is also, at least twice as long as the brackets 16 are wide, so that it can support at least two brackets 16. The arm 14 is an elongate rod-like construction, which mounts the brackets 16 so that they are alongside the mirror assembly 12.

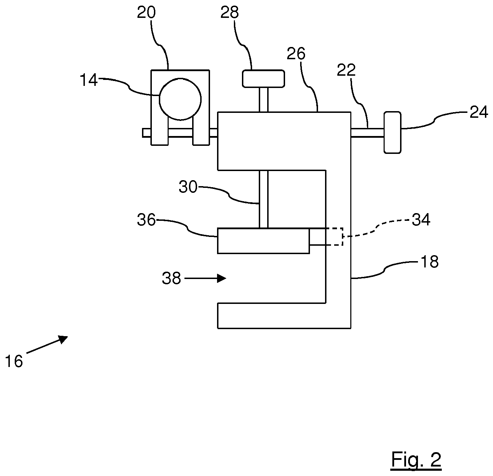

Each clamp 18 comprises a frame 26 and a movable clamping member 28, the clamping member 28 including an engaging portion (shown in Figure 2). The engaging portion is connected to a shaft 30 and is turnably mounted on the shaft 30. The frame includes a guiding slot 32, and the engaging portion includes a guiding element 34 engaging in the guiding slot 32. The purpose of the guiding element 34 and the slot 32 is to assist in the locating and moving of the engaging portion.

Figure 2 shows this engaging portion 36, in a side view of the apparatus 10 of Figure 1, with the mirror assembly 12 removed for clarity. The bracket 16 comprises the clamp 18, the fixing portion 20 and the shaft 22. The clamp 18 can turn about the shaft 22, and the locking element 24 is used to tighten the clamp 18 against the fixing portion 20, when the correct position has been chosen by a user.

The user turns the shaft 30 via the knob of the clamping member 28 and this raises and lowers the engaging portion 36, which is loosely mounted on the shaft 30. This allows the engaging portion 36 to move in such away that the bottom surface of the portion 36 is no longer horizontal. The guiding element 34 can be seen engaging with the slot of the g-clamp 18. Since the engaging portion 36 is moveable on the end of the shaft 30, the guiding arrangement assists the user in the locating of the bracket on the vehicle wing mirror. The gap 38 in Figure 2 shows where a vehicle wing mirror would be secured by the clamp 18. The clamp 18 forms part of the bracket 16, the bracket 16 for connecting the mirror assembly 12 to a vehicle wing mirror.

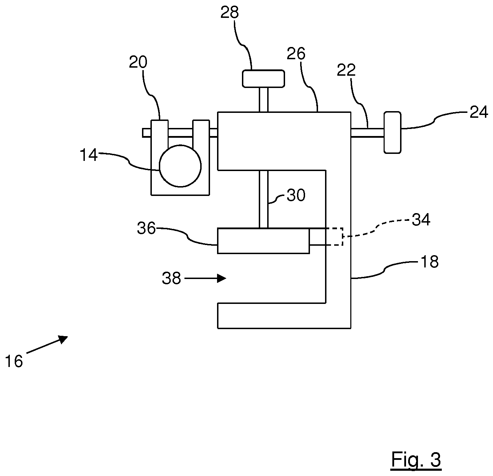

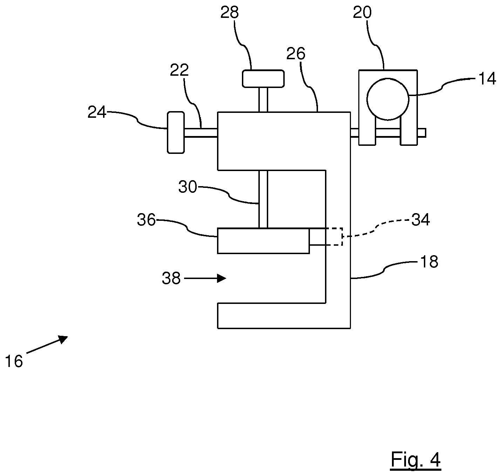

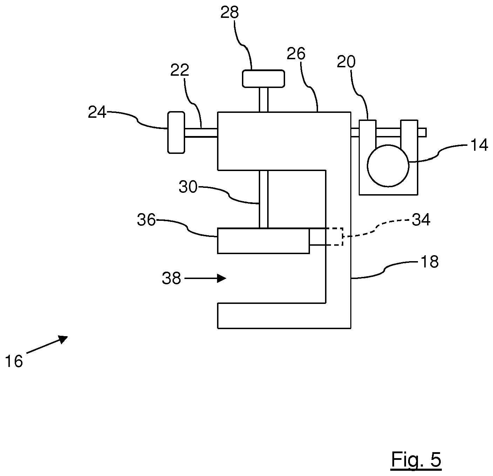

Figure 3 shows the bracket 16 mounted on the arm 14 in a manner different from that shown in Figure 2. In this arrangement, the shaft 22 is mounted above the arm 14, with the fixing portion 20 reversed (rotated 180 degrees), relative to the position in Figure 2. The design of the bracket 16 is such that a wide variety of different connection arrangements are possible, to suit the user, and design of wing mirror, to which the bracket 16 is being fixed. Figure 4 shows a further arrangement, with the bracket 16 connected so that the arm 14 is in front of the bracket 16. The shaft 22 is below the arm 14. A still further arrangement is shown in Figure 5, with shows a view similar to that of Figure 4, with the fixing portion 20 reversed (rotated 180 degrees), relative to the position shown in Figure 4.

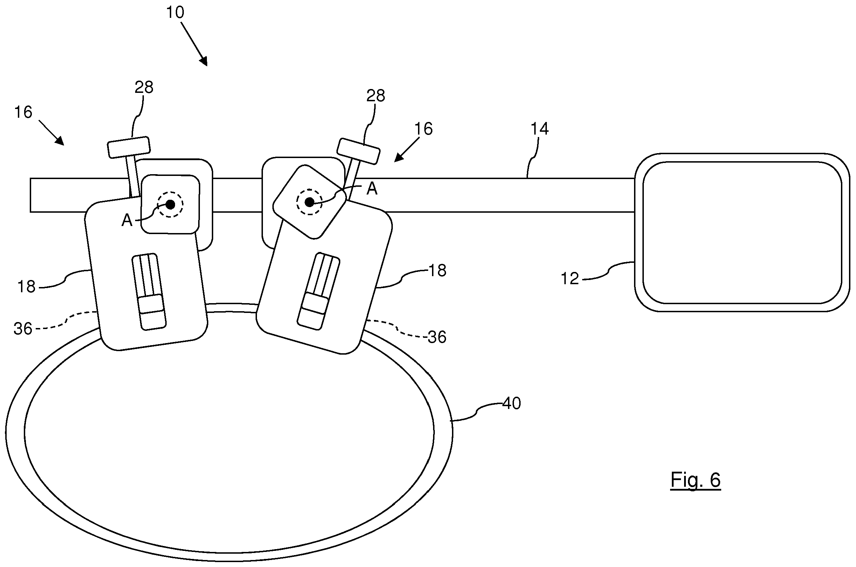

Figure 6 shows the apparatus 10 fixed to a vehicle wing mirror 40. Each of the clamps 18 of the two brackets 16 mounted on the arm 14 have been rotated in opposite directions about their respective axis's A. This rotation facilitates the fastening of the apparatus to the wing mirror 40. The lip of the mirror 40 is fixed between the respective engaging portions 36 of each clamp 18, and the user tightens the clamping member 28 to fasten the towing mirror 10 in place on the wing mirror 40.

## Claims

1. A method of fixing an apparatus (10) comprising a towing mirror (10) to a vehicle wing mirror (40), the apparatus (10) comprising a mirror assembly (12), an arm (14) connected to the mirror assembly (12), and two clamps (18) connected to the arm (14) and for connecting to a vehicle wing mirror (40), each clamp (18) comprising a frame (26) and a movable clamping member (28), the method comprising the steps of:
• rotating the clamps (18) in opposite directions about respective axis's (A) substantially perpendicular to the arm (14), and
• tightening the clamping members (28) to fasten the towing mirror (10) in place on the wing mirror (40).

## Patentansprüche

1. Verfahren, um eine Vorrichtung (10), die einen Anhängerspiegel (10) umfasst, an einem Fahrzeugaußenspiegel (40) zu befestigen, wobei die Vorrichtung (10) eine Spiegelanordnung (12), einen Arm (14), der mit der Spiegelanordnung (12) verbunden ist, und zwei Klemmen (18), die mit dem Arm (14) verbunden sind und zum Verbinden mit einem Anhängerspiegel (40) dienen, umfasst, wobei jede Klemme (18) einen Rahmen (26) und ein bewegliches Klemmenelement (28) umfasst, wobei das Verfahren die folgenden Schritte umfasst:
Drehen der Klemmen (18) in entgegengesetzte Richtungen um die jeweiligen Achsen (A), die senkrecht zu dem Arm (14) sind, und
festes Anziehen der Klemmenelemente (28), um den Anhängerspiegel (10)in seiner Position auf dem Fahrzeugaußenspiegel (40) zu befestigen.

## Revendications

1. Procédé pour la fixation d'un dispositif (10) comprenant un rétroviseur de remorque (10) sur un rétroviseur latéral de véhicule (40), le dispositif (10) comprenant un ensemble de rétroviseur (12), un bras (14) relié à l'ensemble de rétroviseur (12), et deux éléments de serrage (18) reliés au bras (14) et destinés à l'assemblage avec un rétroviseur latéral de véhicule (40), chaque élément de serrage (18) comprenant un cadre (26) et un organe de serrage mobile (28), le procédé comprenant les étapes suivantes :
rotation des éléments de serrage (18) dans des directions opposées autour d'axes (A) respectifs substantiellement perpendiculaires au bras (14), et
serrage des éléments de serrage (28) pour fixer le rétroviseur de remorque (10) en place sur le rétroviseur latéral (40).
